Europäisches Patentamt

(19) European Patent Office

Office européen des brevets

(11) Veröffentlichungsnummer: **0 200 034**
**B1**

(12) # EUROPÄISCHE PATENTSCHRIFT

(45) Veröffentlichungstag der Patentschrift:
**27.12.89**

(51) Int. Cl.⁴: **B 29 C 51/20,** B 29 C 51/08

(21) Anmeldenummer: **86104758.7**

(22) Anmeldetag: **08.04.86**

(54) Vorrichtung zur Herstellung von Kunststoff-Behältern.

(30) Priorität: **15.04.85 DE 3513399**

(43) Veröffentlichungstag der Anmeldung:
**05.11.86 Patentblatt 86/45**

(45) Bekanntmachung des Hinweises auf die Patenterteilung:
**27.12.89 Patentblatt 89/52**

(84) Benannte Vertragsstaaten:
**AT CH FR GB IT LI**

(56) Entgegenhaltungen:
**AT-B-284 430**
**DE-A-2 150 903**
**US-A-3 942 933**

(73) Patentinhaber: **Schenk, Bernd, Dipl.- Ing.,**
**Eibenweg 7, D-7517 Waldbronn (DE)**

(72) Erfinder: **Schenk, Bernd, Dipl.- Ing., Eibenweg 7,**
**D-7517 Waldbronn (DE)**

(74) Vertreter: **Zahn, Roland, Dipl.- Ing., im Speitel 102,**
**D-7500 Karlsruhe 41 (DE)**

EP 0 200 034 B1

## Beschreibung

Die vorliegende Erfindung bezieht sich auf eine Vorrichtung zur Herstellung von Kunststoff-Behältern nach dem Oberbegriff des Patentanspruchs 1.

Bei einer derartigen bekannten Vorrichtung (GB-PS-747 434) werden die Formhälften, nachdem sie zusammengefahren sind, mit der Auspreßgeschwindigkeit der Folienbänder mitbewegt und nach der Auskühlung und Entnahme der Behälter wieder in ihre Ausgangsstellung, die sogenannte Zusammenfahrstellung, zurückgeführt.

Der Antrieb der auf- und abbewegten Formhälften ist das zentrale Problem der Vorrichtung zur Durchführung des aus der GB-PS-747 434 bekannten Verfahrens. Bezüglich dieses Antriebs sind in der GB-PS-747 434 keine Aussagen gemacht, so daß davon auszugehen ist, daß die Formhälften zwischen den beiden Umkehrpunkten ihrer Bewegung, der "Zusammenfahrstellung" und der "Öffnenstellung" jeweils gleichförmig bewegt werden. Die Taktzeit der Vorrichtung setzt sich mithin aus zwei gleichen Zeitintervallen zusammen, dem Intervall vom Schließen der Formhälften bis zum Öffnen, und dem Intervall vom Öffnen bis zum erneuten Schließen.

Die der Erfindung zugrunde liegende Aufgabe besteht darin, eine Vorrichtung zu schaffen, bei der die verfahrensbedingten Ausfallzeiten vermindert werden sollen.

Diese Aufgabe wird durch die im kennzeichnenden Teil des Patentanspruchs 1 angegebenen Merkmale gelöst.

Die Kraftspeicher sind dabei einer Federkennlinie entsprechend ausgebildet (Anspruch 2) und beispielsweise durch Zug- oder Druckfedern realisiert (Anspruch 3).

Die Einzelheiten der Erfindung werden im folgenden anhand der Zeichnungen näher erläutert:

Fig. 1 zeigt in sechs Einzeldarstellungen eine Schemadarstellung der nacheinander ablaufenden Verfahrensschritte;

Fig. 2 zeigt die Prinzipdarstellung der Vorrichtung zur Durchführung des Verfahrens nach Fig. 1 und zwar in einer Stellung, in der sich die geschlossene Form von der Strangpresse weg bewegt (Fig. 2a) und in der Ausgangsstellung unmittelbar vor dem Schließen der Form (Fig. 2b);

Fig. 3 zeigt schematisch den Bewegungsablauf der Formhälften über einen ganzen Zyklus.

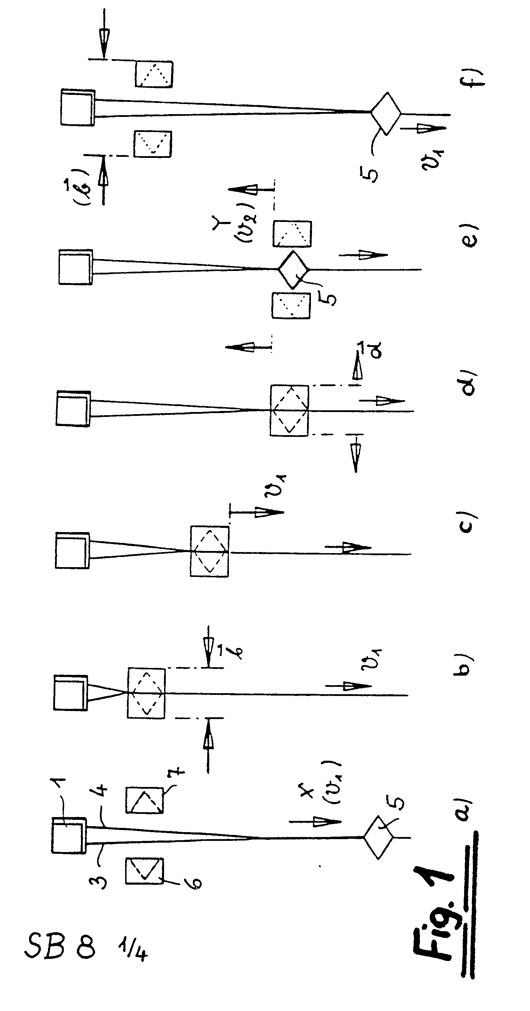

In Fig. 1 ist eine Strangpresse 1 angedeutet, die geschmolzenes Kunststoff-Material über ein Doppelmundstück in Form von zwei getrennten Folienbändern 3, 4 ausstößt. Die beiden Öffnungen des Doppelmundstücks sind im Abstand zueinander angeordnet, so daß die Folienbänder im Abstand zueinander ausgepreßt werden.

Die Folienbänder 3, 4 werden dann - in gehörigem Abstand von der Strangpresse 1 - längs ihrer Längskanten mittels eines nicht gezeichneten Abziehmechanismus abgeführt. Hier werden dann auch die fertigen Kunststoff-Behälter 5 aus den Fest-Folienbändern ausgetrennt.

Sämtlichen Einzeldarstellungen der Schemazeichnung nach Fig. 1 ist vom Aufbau- und Funktionsprinzip her betrachtet die Strangpresse 1 mit den beiden parallel ausgestoßenen Folienbändern 3, 4 sowie die Tatsache, daß diese Folienbänder 3, 4 aus der Strangpresse 1 kontinuierlich ausgestoßen und von einem Abziehmechanismus kontinuierlich abgezogen werden, gemeinsam. Die Ausstoßrichtung ist mit X, die Ausstoßgeschwindigkeit mit V₁ gekennzeichnet.

Das eigentliche Funktionselement der Vorrichtung zur Durchführung des Verfahrens ist eine aus zwei Formhälften 6, 7 bestehende Form, in der Kunststoff-Behälter 5 gebildet wird. Die Formhälften 6, 7 weisen je eine gestrichelt gezeichnete Kavität auf, an die von außen her Vakuum angelegt wird, wodurch der Teil des Folienbandes 3 bzw. 4, der gerade vor der Kavität der entsprechenden Formhälfte 6, 7 zu liegen kommt, in die Kavität hineingezogen wird und zu einer Behälterhälfte verformt wird. Durch gleichzeitiges Zusammenpressen der Formhälften 6, 7 wird sodann das noch plastische Material der Folienbänder 3, 4 längs einer Kante die Kavitäten miteinander verschweißt.

Nach Ablauf einer vom Material der zu formenden Kunststoff-Behälter 5 abhängigen Kühlzeit wird die Form wieder geöffnet und der fertige Kunststoff-Behälter 5 kann aus dem restlichen Folienband ausgetrennt werden.

Die einzelnen Verfahrensschritte werden nun anhand der Fig. 1 a ... 1 f erläutert:

In Fig. 1 a befinden sich die Formhälten 6, 7 in ihrer sogenannten Ausgangsstellung unterhalb der Strangpresse 1. Die Formhälten 6, 7 sind geöffnet und zwischen ihnen werden die Folienbänder 3, 4 hindurchgeführt zwar mit der Ausstoßgeschwindigkeit V₁.

In der Darstellung nach Fig. 1 b sind die Formhälften 6, 7 nunmehr geschlossen (Pfeil b); damit werden die Folienbänder 3, 4 zusammengedrückt und an die Kavitäten kann zwecks Ausformung der Behälterhälften Vakuum angelegt werden. Die Folienbänder 3, 4 werden weiterhin mit der Ausstoßgeschwindigkeit V₁ aus der Strangpresse 1 ausgepreßt.

Gemäß Fig. 1 c wandert auch die aus den Formhälften 6, 7 bestehende Form zusammen mit den eingespannten Folienbändern 3, 4 mit Ausstoßgeschwindigkeit V₁ von der Strangpresse 1 weg.

Nach Ablauf der vorgenannten Kühlzeit hat die Form ihre Stellung erreicht, in der der Behälter 5 fertig ist und entnommen werden kann. In dieser Stellung werden die Formhälften 6, 7 auseinandergefahren (Pfeil d) ... Fig. 1 d.

Fig. 1 e zeigt die geöffneten Formhälften 6, 7 aus denen nunmehr ein fertiger Behälter 5 in Richtung (X) von der Strangpresse 1 weg zwar mit der Ausstoßgeschwindigkeit V₁ ausrücken kann.

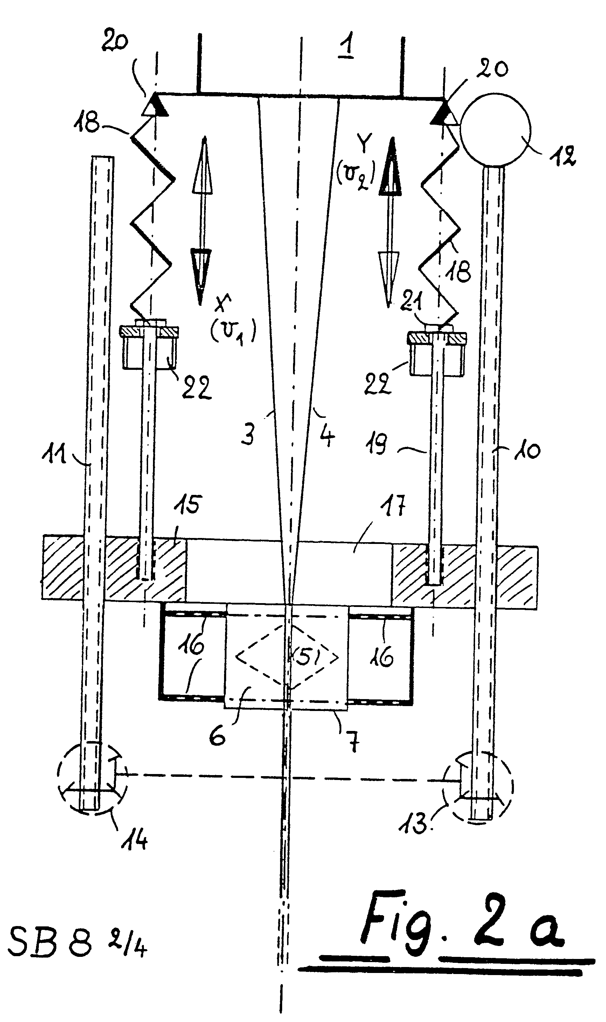

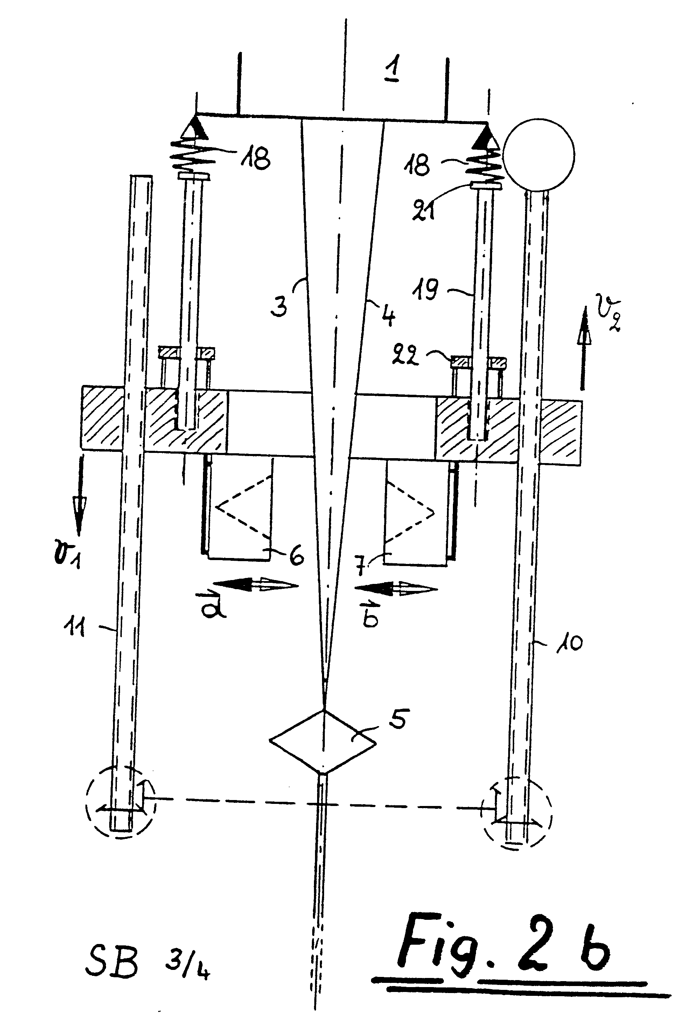

In Fig. 1 e ist durch den Pfeil Y bereits ange- deutet, daß die Formhälften 6, 7 nunmehr wieder zu ihrer Ausgangsstellung hin verfahren werden. Dabei hat es sich, wie anhand der Vorrichtung nach Fig. 2 noch erläutert wird, gezeigt, daß die Formhälften erheblich schneller von der End- stellung zur Ausgangsstellung zurückgefahren wer- den können, als es der Ausstoßgeschwindigkeit $V_1$ entspricht; diese Rückführgeschwindigkeit ist mit $V_2$ gekennzeichnet.

Fig. 1 zeigt wiederum die Ausgangsstellung. Die Formhälften 6, 7 sind wieder geöffnet; sie werden mit dem nächsten Arbeitstakt geschlossen, um einen nächsten Behälter 5 zu formen.

Aus der Darstellung der Einzelschritte nach Fig. 1 geht hervor, daß die Strangpresse 1 kontinuierlich die Folienbänder 3, 4 ausstoßen kann, ohne daß die Gefahr besteht, daß sich Folienmaterial über den Formhälften aufstaut und ohne daß die Folienbänder 3, 4 mit den Behältern 5 über einen intermittierend betriebenen Abziehmechanismus abgezogen werden müssen. Die Form bewegt sich kontinuierlich mit den Folienbändern 3, 4 von der Strangpresse 1 weg und öffnet erst, wenn der Behälter 5 ausgekühlt ist (und damit formfest ist). Aus dieser Öffnungsposition wird die Form sodann mit einer gegen- über der Ausstoßgeschwindigkeit $V_1$ wesentlich grösseren Rückführgeschwindigkeit $V_2$ in die Ausgangsstellung zurückgeführt.

Die Vorrichtung zur Durchführung des Verfahrens wird anhand von Fig. 2 erläutert. Dabei wird insbesondere auf die Kraftmittel hingewiesen, die zur beschleunigten Rückführung der Formhälften in ihre Ausgangsstellung in die Vorrichtung integriert sind.

Fig. 2 a zeigt die Vorrichtung in der Arbeitsstellung, in welcher die aus den zwei Formhälften 6, 7 bestehende Form den bezogen auf das ther- moplastische Material vorbestimmten notwendi- gen Abstand von der Strangpresse 1 hat. Die Formhälften 6, 7 sind noch geschlossen; der Behälter 5 ist in dieser Position verschweißt und abgekühlt, so daß er entnommen werden kann.

Die Formhälften 6, 7 wurden gemeinsam mit den eingespannten Folienbändern 3, 4 mit der ausgestoßenen Geschwindigkeit $V_1$ von der Strangpresse 1 weg bewegt (Pfeil X).

Diese Bewegung wird über Gewindespindeln 10, 11 vermittelt, die über einen Motor 12 und zwei Getriebeeinheiten 13, 14 Kraftschlüssig gekoppelt sind. Die Gewindespindeln 10, 11 sind ihrerseits form- und kraftschlüssig mit einer Halte- platte 15 verbunden, die über die Gewindespindeln 10, 11 relativ zur Strangpresse 1 heb- und senkbar ist.

Die Halteplatte 15 trägt ihrerseits die Formhälften 6, 7 die auf der Halteplatte 15 und zwar in einer lotrecht zur Bewegungsrichtung (X, Y) liegenden Ebene relativ zueinander verschiebbar sind (vgl. b, d in Fig. 1 und Fig. 2 b). Diese Ver- schiebemöglichkeit wird ebenfalls über Gewinde- spindeln 16 realisiert, die kräftemäßig gekoppelt sind und über einer - nicht gezeichneten - Elektromotor angetrieben werden.

Die Halteplatte 15 hat eine Durchgangsöffnung 17, durch die die Folienbänder 3, 4 hindurchgezogen werden und über den eingangs er- wähnten Abziehmechanismus abgezogen wer- den. Im Beispiel nach Fig. 2 ist die Form auf der der Strangpresse 1 abgewandten Seite der Halteplatte 15 angeordnet.

Die erfindungsgemäße Ausbildung dieser soweit beschriebenen Vorrichtung besteht darin, daß die Halteplatte 15 über eine Art Federakkumulator, allgemein über Kraftmittel aufgehängt sind, die bei Bewegung der Form in Richtung X gewissermaßen aufgeladen d. h. mit Energie angereichert wird. Bei der Rückführung der Formhälften 6, 7 bzw. der Halteplatte 15, wird die gespeicherte Energie wieder freigesetzt, so daß die Rückführung energetisch unterstützt wird.

Durch die ausgeglichene Dimensionierung der Federn relativ zum Gewicht der bewegten Halteplatte 15 wird erreicht, daß bei Bewegung der Platte über den Nullpunkt hinweg die Federn relativ entlastet werden, wodurch eine Kraftkomponente (in Richtung X) nach unten entsteht. Damit wird im oberen Umkehrpunkt das gleiche Ergebnis wie im unteren Umkehrpunkt erreicht; die zusätzliche, zur Beschleunigung notwendig wird vom Speicher und nicht vom Antriebsmotor abgefordert.

Der genannte Federakkumulator ist im Beispiel nach Fig. 2 durch Zugfedern 18 gebildet, die einerseits über Zugstangen 19 mit der Halteplatte 15 und andererseits mit einem im Bereich der Strangpresse 1 liegenden Festpunkt 20 verbunden sind.

Andere Ausführungsformen des Federakkumulators sind als hydropneumatischer oder pneumatischer Akkumulator oder aber als Druckfederspeicher realisierbar.

Die Verbindung zwischen Zugstange 19 und Zugfeder 18 weist einen Anschlag 21 auf, über den der Weg der Halteplatte 15 und damit der Formhälfte 6, 7 begrenzt werden kann. Hiezu ist ein Führungsring 22 vorgesehen, der relativ zur Strangpresse 1 festliegt. Hat der Anschlag 21 - wie in Fig. 2a dargestellt - den Führungsring 22 erreicht, so ist die Endposition der Halteplatte 15 bzw. der Form erreicht; die zugfedern 18 sind maximal gelängt und haben somit ein Maximum an Federenergie gespeichert.

In der in Fig. 2a gezeichneten Arbeitsstellung wird nun zeitlich betrachtet die Form geöffnet; dabei wird der Behälter freigegeben und vom Ab- ziehmechanismus abgezogen. Zeitlich überlap- pend wird die Rückführung der Halteplatte 15 mit den Formhälften 6, 7 eingeleitet.

Diese Rückführung wird energetisch von der in den Zugfedern 18 gespeicherten Energie unterstützt, was insbesondere insofern besonders positiven Einfluß auf das Gesamtsystem hat, als die Rückführungsgeschwindigkeit V 2 erheblich, insbesondere zehnmal, größer sein kann als die Ausstoßgeschwindigkeit V 1.

Fig. 2b zeigt die Formhälften 6, 7 in der Strangpresse 1 nächstgelegenen Ausgangsstel- lung. Die Formhälften 6, 7 sind entsprechend Pfeil d geöffnet.

Die Halteplatte 15 ist über die Gewindespindel 10, 11 in diese Ausgangsstellung bewegt worden und zwar unter Ausnutzung der in den Zugfedern 18 gespeicherten Energie mit der relativ großen Rückführgeschwindigkeit V 2. Mechanisch ist diese Ausgangsstellung dadurch definiert, daß die Halteplatte 15 an dem Führungsring 22 anliegt.

Die Zugfedern 18 sind in dieser Ausgangsstellung entspannt; der zuletzt gefertigte Behälter 5 wird nach unten abgezogen.

Zeitlich betrachtet geschieht nun folgendes:

Die beiden Formhälften 6, 7 fahren zusammen (Pfeil b) und schnüren die Folienbänder 3, 4 ein. Mit der Ausstoßgeschwindigkeit V 1 wird die Halteplatte 15 mit den Formhälften 6, 7 von der Strangpresse 1 weg bewegt, wobei gleichzeitig die Zugfedern 18 wieder "aufgeladen" werden.

Im Hinblick auf die beschriebene Wirkung der Zugfedern soll abschließend noch vermerkt werden, daß durch dieses Konzept die für die Rückführung der Halteplatte mit der Form verantwortlichen Elektromotoren wesentlich schwächer dimensioniert werden können, als wenn sie alleine die Rückführung zu vollziehen hätten.

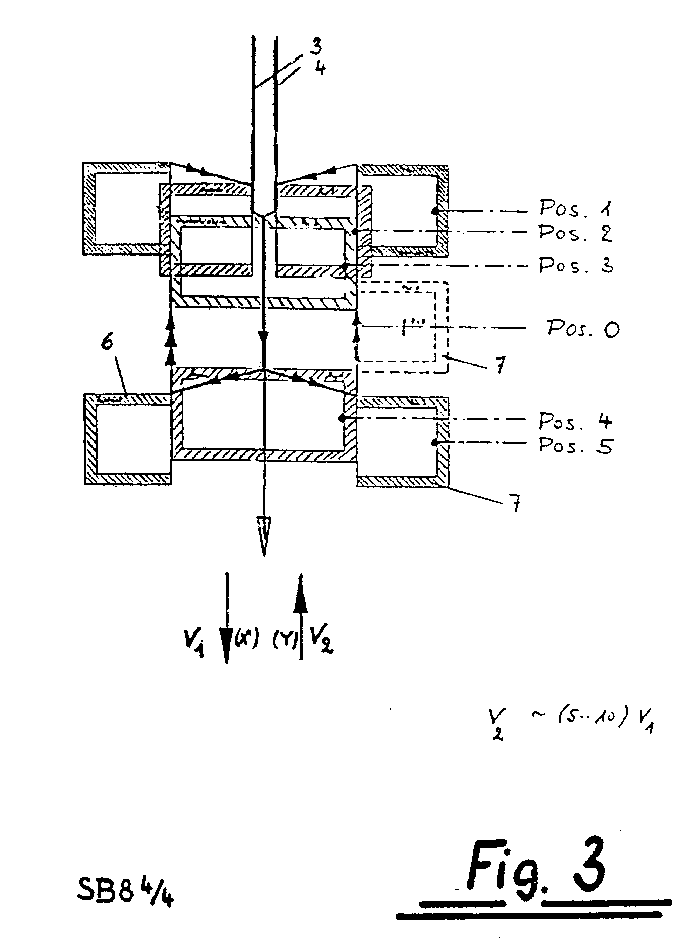

Der Bewegungsablauf der Formhälften soll anhand von Fig. 3 nochmals im Detail erläutert werden:

Ausgehend von einer Mittelstellung (Pos. 0) der geöffneten Form 6, 7, in der die Aufhängefedern in ihrer Ruhestellung seien, wird die Form mit hoher Rückführgeschwindigkeit V 2 mit zusätzlicher Antriebsenergie und zwar gegen die Federkraft der Aufhängefedern in ihre obere Schließstellung gefahren. In der Schließstellung (Pos. 1) werden die Formhälften 6, 7 zusammengeführt; durch Eigengewicht und über die Federkraft werden die beiden Formhälften 6, 7 dabei in die unter der Schließstellung liegende Haltestellung (Pos. 2) überführt. Von hier aus wandert die Form mit der Ausstoßgeschwindigkeit V₁ der Folienbänder 3, 4 nach unten und zwar ohne Zusatzantrieb alleine durch Eigengewicht und Federkraft, d. h. in den Aufhängefedern gespeicherter Energie. Nach einer systemspezifischen Zeitspanne werden sodann die Formhälften 6, 7 auf Anschlag zusammengefahren (Pos. 3). Ab hier beginnt die Verschweiß- und Kühlphase der geformten Erzeugnisse. Auf dem Weg zur unteren Endstellung, der sogenannten Öffnungsstellung durchläuft die Form wieder den Punkt, an dem die in den Aufhängefedern gespeicherte Energie verzehrt ist. Die Form muß nun mit Motorkraft gegen die Federkraft zur Öffnungsstellung verfahren werden. Ist die Öffnungsstellung (Pos. 4) erreicht, so wird die Form auf Grund eines Öffnungssignals geöffnet, wobei die Form nun bis zur vollkommenen Öffnung noch ein Stück nach unten, d. h. in Ausstoßrichtung bewegt wird. Ist die wahre Endstellung erreicht (Pos. 5), so wird die Form auf Grund der in den Aufhängefedern gespeicherten Energie in Richtung Mittelstellung (Pos. 0) und darüberhinaus in Richtung Schließstellung (Pos. 1) bewegt.

Wenn man den vorstehend beschriebenen Bewegungsablauf im Zeitdiagramm betrachtet, so beträgt die Zeitrelation zwischen der Wegzeit von Pos. 5 nach Pos. 1 und der Wegzeit zwischen Pos. 1 und Pos. 5 je nach Auslegung der Antriebseinheit etwa 5 ... 10; d. h. die Form wird mit relativ zur Ausstoßgeschwindigkeit V₁ hoher Rückführgeschwindigkeit V₂ in ihre obere Schließstellung zurückbewegt, womit schließlich eine sehr günstige Taktzeit erreichbar ist.

Abschließend soll noch angemerkt werden, daß mit der erfindungsgemäßen Aufhängung der Form bzw. der Ausnutzung der Federenergie nur relativ wenig zusätzliche Energie von außen zugeführt werden muß. Der Motor ist in der Rückführphase praktisch nur für den Weg zwischen den Pos. 0 und Pos. 1 erforderlich, d. h. einzuschalten. Auf den Weg von oben nach unten ist nur auf dem Weg von der Mittelstellung zur Pos. 5, in der die Formhälften 6, 7 wieder geöffnet werden, der Motor als Zusatzantrieb erforderlich.

## Patentansprüche

1. Vorrichtung zur Herstellung von Kunststoff-Behältern (5) durch Vakuum-Tiefziehen,

wobei a) zwei aus einer Strangpresse (1) nebeneinander ausgepreßte Folienbänder (3, 5) aus thermoplastischem Kunststoff in plastischem Zustand einer mehrteiligen Vakuum-Tiefziehform zugeführt und zu je einer Behälterhälfte verformt werden,

wobei b) die Behälterhälften in der Form durch Zusammenfahren der Formhälften (6, 7) miteinander verbunden und die fertigen Behälter (5) der Form entnommen werden,

wobei c) die Formhälften (6, 7), nachdem sie in einer Ausgangsstellung zusammen gefahren und die Folienbänder (3, 5) flächig aneinandergepreßt sind, mit der Ausstoßgeschwindigkeit (V₁) der Folienbänder (3, 5) von der Strangpresse (1) weg bewegt werden,

wobei d) die Formhälften (6, 7) nach Erreichen eines von der Kühlzeit des Behältermaterials abhängigen Abstands von der Strangpresse (1) geöffnet werden, und

wobei e) die Formhälften (6, 7) nach dem Öffnen und der damit verbundenen Freigabe des fertigen Behälters (5) in die Ausgangsstellung zurückgeführt werden, *dadurch gekennzeichnet,* daß die Formhälften (6, 7) über Kraftspeicher (Zugfedern 18) aufgehängt sind, mittels denen eine gegenüber der Ausstoßgeschwindigkeit (V₁) wesentlich höhere Rückführgeschwindigkeit (V₂) zur Ausgangsstellung hin realisierbar ist.

2. Vorrichtung nach Anspruch 1, *dadurch gekennzeichnet,* daß die Kraftspeicher (Zugfedern 18) einer Federkennlinie entsprechend ausgebildet sind, und daß sie bei der Bewegung in Richtung Öffnungsstellung im Sinne einer Energiespeicherung beaufschlagt werden, wobei die gespeicherte Energie bei Rückführung in die Ausgangsstellung abgegeben wird.

3. Vorrichtung nach Anspruch 2, *dadurch gekennzeichnet,* daß die Kraftspeicher durch Zug- oder Druckfedern (18) realisiert sind.

## Claims

1. Apparatus for producing synthetic plastics material containers (5) by vacuum deep-drawing,

wherein a) two foil strips (3, 5) made of thermoplastic synthetic plastics material, which are extruded adjacently from an extrusion press (1) in the plastic state, are conveyed to a multipart vacuum deep-drawing mould and are each shaped so as to form one half of a container.

wherein b) the container halves are joined together in the mould, by bringing together the mould halves (6, 7), and the finished containers (5) are removed from the mould,

wherein c) the mould halves (6, 7), after they have been brought together in an initial position and the foil strips (3, 5) have been pressed flatly against one another, are moved away at the expulsion speed ($V_1$) of the foil strips (3, 5) from the extrusion press (1),

wherein d) the mould halves (6, 7) are opened after reaching a distance from the extrusion press (1) which is dependent upon the cooling time of the container material, and

wherein e) the mould halves (6, 7), after the opening and the consequent release of the finished container (5), are conveyed back into the initial position, *characterised* in that the mould halves (6, 7) are suspended by way of power storage means (traction springs 18), with the aid of which it is possible to realise a return speed ($V_2$), towards the initial position, which is substantially greater in comparison to the expulsion speed ($V_1$).

2. Apparatus according to claim 1, *characterised* in that the power storage means (traction springs 18) are constructed corresponding to a spring characteristic line, and in that, in the movement in the direction of the opening position, they are impacted upon in the sense of a storage of energy, the stored energy being emitted during the return into the initial position.

3. Apparatus according to claim 2, *characterised* in that the power storage means are embodied in the form of traction- or pressure -springs (18).

## Revendications

1. Dispositif pour fabriquer des récipients (5) en matière plastique par emboutissage profond sous vide,

dans lequel a) deux rubans de film (3, 4) en une matière thermoplastique, exprimés d'une boudineuse (1) en juxtaposition, sont dirigés à l'état plastique vers un moule d'emboutissage profond sous vide, en plusieurs parties, et sont amenés à la forme d'une moitié respective de récipient,

dans lequel b) les moitiés du récipient sont reliées l'une à l'autre, dans le moule, par regroupement des demi-moules (6, 7), puis les récipients achevés (5) sont prélevés de ce moule,

dans lequel c) les demi-moules (6, 7), après qu'ils ont été regroupés dans une position de départ et que les rubans de film (3, 4) ont été pressés à plat l'un contre l'autre, sont déplacés à l'écart de la boudineuse (1) à la vitesse d'expulsion ($V_1$) des rubans de film (3, 4),

dans lequel d) les demi-moules (6, 7) sont ouverts après avoir atteint, vis-à-vis de la boudineuse (1), une distance dépendant du temps de refroidissement du matériau constituant les récipients et

dans lequel e) les demi-moules (6, 7) sont ramenés à la position de départ après l'ouverture, et après la libération corrélative du récipient achevé (5), *caractérisé* par le fait que les demi-moules (6, 7) sont suspendus par l'intermédiaire d'accumulateurs de forces (ressorts de traction 18), au moyen desquels peut être obtenue une vitesse ($V_2$) de rappel à la position de départ qui est notablement plus grande que la vitesse d'expulsion ($V_1$),

2. Dispositif selon la revendication 1, *caractérisé* par le fait que les accumulateurs de forces (ressorts de traction 18) sont réalisés en concordance avec une courbe d'élasticité caractéristique et par le fait qu'ils sont sollicités dans le sens d'une accumulation d'énergie lors du mouvement en direction de la position d'ouverture, l'énergie accumulée étant dispensée lors du rappel à la position de départ.

3. Dispositif selon la revendication 2, *caractérisé* par le fait que les accumulateurs de forces sont réalisés sous la forme de ressorts de traction ou de pression (18).

SB 8   1/4

**Fig. 1**

a)   b)   c)   d)   e)   f)

SB 8 2/4

Fig. 2 a

SB 3/4

## Fig. 2 b

Pos. 1
Pos. 2
Pos. 3

Pos. 0

Pos. 4
Pos. 5

$V_2 \sim (5 \cdots 10)\, V_1$

$V_1$ (X)  (Y) $V_2$

**Fig. 3**

SB8 4/4